# EUROPEAN PATENT SPECIFICATION

(11) **EP 2 431 669 B1**
(45) Date of publication and mention of the grant of the patent: **03.08.2016**
(21) Application number: 10425308.3
(22) Date of filing: 21.09.2010
(51) Int. Cl.: F24D 13/02, A47K 3/28

(54) **electrically heated glass panel**
elektrisch erhitzte Platte
panneau de verre chauffé électriquement

(43) Date of publication of application: 21.03.2012
(73) Proprietor: Vismaravetro S.r.l., 22066 Mariano Comense - Como (IT)
(72) Inventor: Vismara, Giuseppe, 22066 Mariano Comense (CO) (IT)
(74) Representative: Perani, Aurelio

(56) References cited:
- DE-A1-102008 038 650
- FR-A1- 2 666 475
- FR-A1- 2 908 262
- US-A1- 2006 051 079

## Description

The present invention relates to an electrically heated panel of stratified glass which may be used to form enclosures bounding a shower stall.

Within the scope of the present invention, the term shower stall is understood not just as the enclosed space around a shower tray but also an enclosed space about a bath.

Laminar glass structures normally composed of two sheets provided internally with an electrical system which heats the sheets and therefore emits heat into the surrounding environment are known in the technology in the sector.

US 2006/051079 and FR 2 908 262, for example disclose devices for heating cloths having two sheets with an interposed layer of electrically conducting material.

Also, DE 10 2008 038 650 A1 relates to a glass heater with an electrical heating element used in a moist environment, as in e.g. shower stalls. The electrical heating element is supplied with a low voltage of 48V and comprises two electrodes having a form and a position selected in order to obtain a defined distribution of the electrical voltage.

The glass structures with an electrical heating device known at present are provided with fittings for the electricity supply and for insulation which, although enabling their application in many technological sectors, for instance in the construction of walls for refrigeration cabinets in which the wall is heated to prevent the formation of condensation which would prevent a user from seeing the products stored and displayed therein, are not used in the construction of enclosures which may be struck by water sprays, as in the case of a shower stall which, moreover, accommodates a user who could run the risk of electric shocks during a shower if the installation were to malfunction.

The problem which the present invention seeks to resolve is one of providing an electrically heated glass panel with a structure enabling its use in the construction of heated enclosures for shower stalls.

The problem is resolved by a panel according to the accompanying claim 1 to which reference should be made.

The invention is described in further detail below with reference to a preferred embodiment given purely by way of non-limiting example and illustrated in the attached drawings, in which:
Fig. 1 is a diagrammatic front view of a panel with an electrical heating device according to the invention, embodied as an enclosure for a shower stall;
Fig. 2 is a partial cross-section, on an enlarged scale, of the panel of Fig. 1 along the line II-II of Fig. 1;
Fig. 3 is a cross-section along the line III-III of Fig. 2 at the location of the terminals for supplying electricity to the layer of electrically conducting material of the panel;
Fig. 4 is a diagrammatic view in cross-section of the box member bearing the external electrical connections for the terminals of the layer of electrically conducting material.

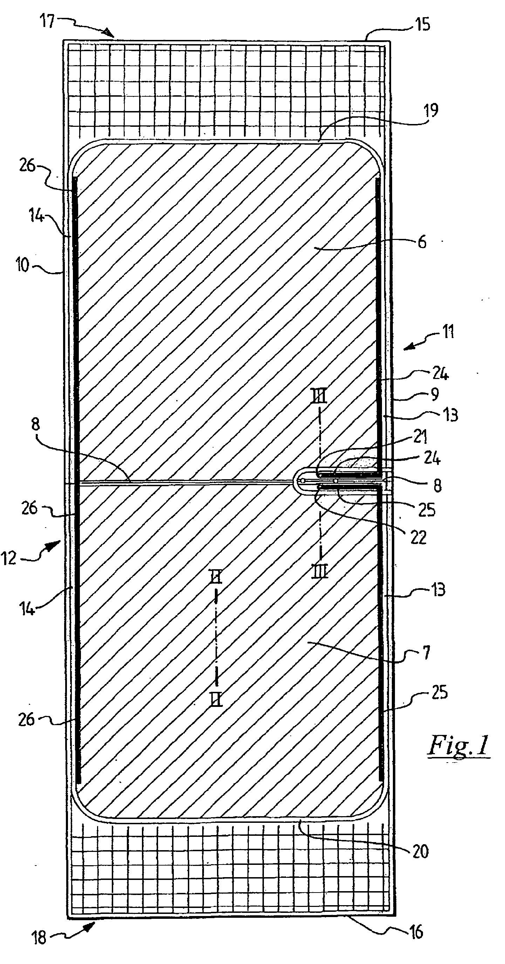

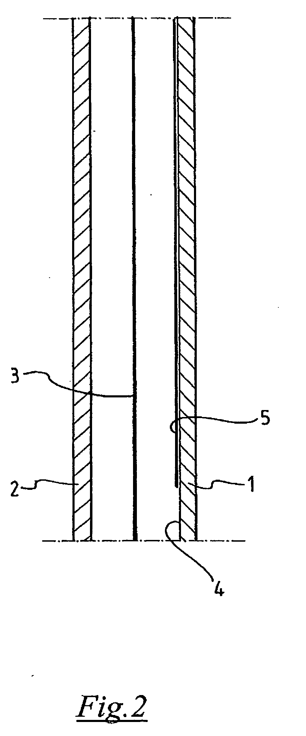

With reference to the above drawings, and in particular Figs. 1 and 2, the structure of the panel of the invention comprises a first glass sheet 1 on which a second glass sheet, shown by 2, is superimposed, with the interposition of an intermediate layer 3 of electrically non-conducting material 3. The intermediate layer 3 is preferably, but not exclusively, made from an electrically non-conducting plastics material.

This intermediate layer 3, as well as providing for the electrical insulation of the panel of the invention, as will be explained in further detail below, is used, using conventional technologies, to form a composite structure formed by the glass sheets 1 and 2.

The glass sheets 1 and 2 have been subject to a prior tempering or hardening treatment, conventional in glass sheet technology, in order to provide them with a high resistance to breakage and to temperature variations resulting from heating.

A layer 5 of electrically conducting material, preferably formed by a metal oxide, is positioned between the intermediate layer 3 and the surface 4 of the sheet 1 which, in the composite structure, faces the intermediate layer 3.

The layer 5 may be formed by depositing the metal oxide on the surface of the intermediate layer 3 facing the surface 4 of the sheet 1 or, preferably, by depositing it directly on the surface 4.

The depositing of the coating 5 takes place by conventional methods known in the glass processing sector.

The glass sheets 1 and 2 are coupled as a single monolithic panel by means of the intermediate layer 3 of plastics material by means of an autoclave stratification method under predetermined pressure and temperature conditions using technologies known and conventional in the glass processing sector.

According to the invention, the layer 5 of electrically conducting material extends between the first sheet 1 and the intermediate layer 3 with the formation of a border zone with no electrically conducting material spaced from the edge of the border both of the first sheet 1 and the intermediate layer 3, as will be described in further detail below in relation to a preferred embodiment of the invention.

The layer 5 of electrically conducting material is connected to a first and a second electrical terminal, both accessible from outside the first glass sheet 1, positioned at points spaced from one another. These terminals, which will be described in further detail below in relation to a preferred embodiment of the invention, diffuse the electrical current at both low voltage and conventional mains voltage through the layer 5 of electrically conducting material and make it possible, as will be explained below, to ensure electrical continuity with external supply line.

The electrically conducting layer 5, preferably deposited on the surface 4 of the sheet 1, in accordance with a preferred embodiment shown in Fig. 1, extends to form two zones, shown by 6 and 7 respectively, separated from one another by a section 8 of surface 4 which has no coating and does not therefore conduct electricity.

These zones 6 and 7 are also spaced from the edges 9 and 10 of the pair of opposing sides 11 and 12 of the panel by means of respective sections 13 and 14 of surface 4 with no coating and which do not therefore conduct electricity.

The sections 8, 13 and 14 with no coating which do not therefore conduct electricity may be obtained when the coating 5 is being deposited or, in accordance with a preferred solution, thereafter, by removing the deposited layer.

When the glass sheets 1 and 2 are, in a preferred embodiment, provided with a quadrilateral contour, as shown in Fig. 1, the opposing sides 11 and 12 are parallel and the non-conducting sections 13 and 14 also extend parallel to the edges 9 and 10.

In accordance with the invention, the zones 6 and 7 are also spaced from the edges 15 and 16 of the pair of opposing sides 17 and 18 of the composite panel by respective sections 19 and 20 of surface 4 which do not conduct electricity.

The sections 19 and 20 are connected to the sections 13 and 14 with the result that the zones 6 and 7 can be individually differentiated.

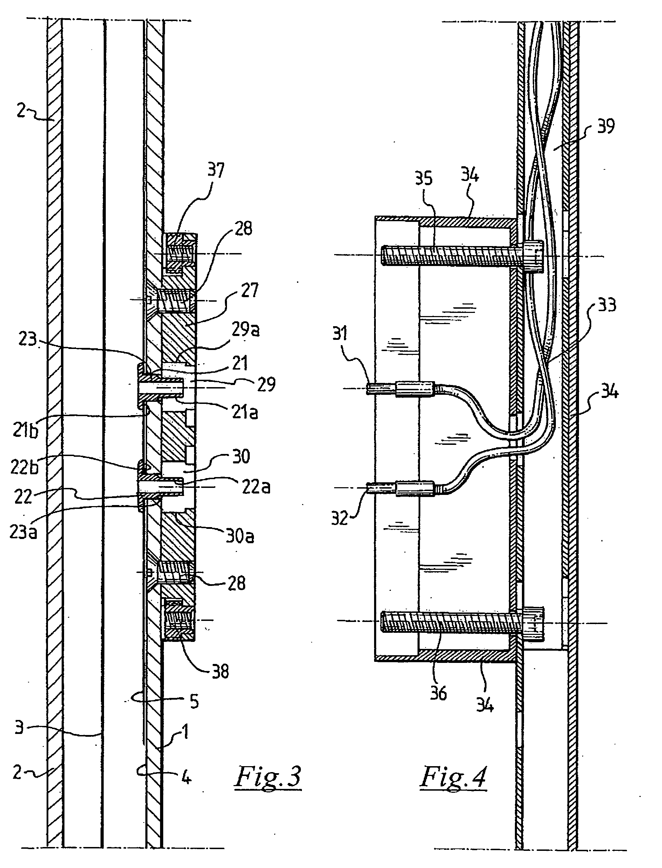

In accordance with the invention, the zones 6 and 7 are provided with respective electrical terminals shown respectively by 21 and 22, in the form of electrodes, in contact with the coating layer 5 and accessible from outside the sheet 1 by causing them to pass through an appropriate respective hole shown by 23 and 23a in Fig. 3, as will be described in detail below.

The terminals 21 and 22 are in contact with respective conducting strips 24 and 25, extending predominantly longitudinally and made, for instance, by depositing electrically conducting material on the zones 6 and 7, which extend over these zones parallel to the section 13, from the side of the edge 9 until they reach the vicinity of the respective sections 19 and 20 with no coating.

The conducting strips 24 and 25 are designed to distribute the electrical voltage supplied via the terminals 21 and 22 superficially on one side of the zones 6 and 7.

These zones 6 and 7, again in accordance with the preferred, but not exclusive, embodiment of the invention, are electrically connected to one another by a single conducting bar 26 which extends parallel to the section 14 with no coating, from the side of the edge 10 opposite the edge 9.

The bar 26 may also be produced by depositing a strip of electrically conducting material on the zones 6 and 7 using conventional technologies, for instance by serigraphy.

The electrical heating circuit is therefore formed, starting from the terminal 21, by the bar 24, the zone 6 of the coating, the connection bar 26, the zone 7 of the coating, the bar 25 and finally the terminal 22.

For reasons of improved safety, the sections 19 and 20 with no conducting coating are preferably obtained on the panel so that they are, in the enclosure of the shower stall, spaced from the respective edges 15 and 16 and in particular from the edge 16 designed to be the lower edge resting on the shower tray which is likely to be struck by the most water.

In Figs. 3 and 4, the panel, in accordance with the invention, includes, at the location of the terminals 21 and 22, a plate 27 connected to the external sheet 1. This connection can be by adhesion or, preferably, by screws 28 positioned during the formation of the composite structure.

The plate 27, at the location of each electrical terminal 21 and 22, has a respective recess 29 and 30 which houses a section 21a, 22a of the terminals 21, 22 which is spaced from the inner wall 29a and 30a of the respective recess through the formation of an annular space in order to enable, in a conventional manner, the male and female coupling of the terminals 21 and 22 with the external terminals 31 and 32 of a two-wire electricity supply cable 33.

The external connection terminals 31 and 32 are housed in a box shown diagrammatically by 34 in Fig. 4, which is inserted on the plate 27 and secured thereto by screws 35 and 36 which engage in respective threaded seats 37 and 38 obtained in the plate 27.

The electrical connection between the terminals 21 and 22 and the coating layer 5 may be obtained by means of a flanged configuration 21b, 22b of their base positioned between the intermediate layer 3 and the conducting layer 5.

A device, also known, for switching on and regulating the intensity of the electrical supply may be housed in the box member 34 which is preferably of the leak-tight type.

As an alternative, the ignition and regulation device may be disposed in a remote position with respect to the shower enclosure.

The electrical supply cable 33, in its path external to the box 34, may be housed in a tubular section 33 of a cover profile 34 which, in the section not superimposed on the box member 34, is spaced from the enclosure and may act as a towel holder.

It will be appreciated from the above description that the enclosure formed by the heating panel of the invention is preferably a fixed wall of a shower stall. As an alternative, however, the heating panel may also be used to form a door or a moving wall.

Moreover, in accordance with a further alternative, the panel of the invention may have any shape, for instance circular or elliptical, and may be used to form only part of a shower stall enclosure, the remaining part being formed by a conventional structure using conventional materials.

Lastly, the glass sheets for the formation of the composite structure may be of a fully transparent type or may, possibly only in part, be of a coloured type.

Any dimensions may obviously be used depending on requirements without thereby departing from the scope of the invention as described above and as claimed in the accompanying claims.

## Claims

1. An electrically heated composite glass panel designed to form walls for shower stalls, comprising:
a first glass sheet (1),
a second glass sheet (2) having the same outline as the first glass sheet (1) and superimposed thereon,
an intermediate layer (3) of electrically non-conducting material disposed between the first (1) and the second glass sheet (2), the intermediate layer being designed to form a composite structure with the glass sheets,
a layer (5) of electrically conducting material positioned and extending between the intermediate layer (3) and a surface (4) of said first glass sheet (1) facing the intermediate layer (3), said layer (5) of electrically conducting material extending so as to form a border zone (13,14,19,20) of the surface (4) of said first glass sheet (1), the border zone being free from electrically conducting material, wherein
said layer (5) of electrically conducting material is spaced from the outline border (9, 10, 15, 16) of the first glass sheet (1) and of the intermediate layer (3) **characterised in that** said layer (5) of electrically conducting material forms two zones (6, 7) separated from one another by a non-electrically conducting section (8) of the surface (4) free from the layer of electrically conducting material (5),
each zone (6, 7) is provided with a first and a second electrical terminal (21, 22), in the form of electrodes, being connected to and in contact with the layer (5) of electrically conducting material at points spaced from one another, both electrical terminals (21, 22) being accessible from outside the first glass sheet (1) by causing them to pass through a respective hole (23, 23a),
the two zones (6,7) are spaced from the outline border (9, 10, 15, 16) of the first glass sheet and are connected to the respective terminal (21, 22), the first and second electrical terminals being positioned at the location of a first section (9) of the outline of the first glass sheet (1), each zone being electrically connected to the other at the location of a second section (10) of the outline of the first glass sheet, said second section (10) of the outline being opposite to the first section (9) of the outline and spaced therefrom,
the first and second electrical terminals (21, 22) comprise a respective section (21 a, 22a) housed in respective recesses (29, 30) of a plate (27) secured to the outer surface of the first glass sheet (1), the section of terminal being spaced from an inner wall (29a, 30a) of the relative recess (29, 30) through the formation of a surrounding annular space, and
a box-shaped member (34) secured to the plate (27) rigid with the first glass sheet (1), the box-shaped member (34) containing electricity supply terminals which can be coupled to the sections (21 a, 22a) of the first and second electrical terminals (21, 22) housed in said respective recesses (29, 30).

2. The panel according to claim 1, **characterized in that** the layer (5) of electrically conducting material is formed by a coating of metal oxide deposited on the surface (4) of the first glass sheet (1) facing the intermediate layer (3).

3. The panel according to claim 1, **characterized in that** the layer (5) of electrically conducting material is formed by a coating of metal oxide deposited on the intermediate layer (3) on its surface facing the inner surface (4) of the first glass sheet (1).

4. The panel according to claims 1 to 3, **characterized in that** the intermediate layer (3) is made by a plastic material.

5. The panel according to claim 1, **characterized in that** the electrical terminals (21, 22) are connected with the layer of electrically conducting material (5) by the interposition of respective predominantly longitudinally extending strips (24, 25) of conducting material designed to distribute the electrical current to the electrically conducting layer (5).

6. The panel according to claim 5, **characterized in that** the strips of conducting material connected to the terminals extend along opposite borders of the outline of the first glass sheet (1).

7. The panel according to claims 1 to 6, wherein the first glass sheet (1) has a quadrilateral outline, the second glass sheet (2) has the same quadrilateral outline as the first glass sheet and wherein the two zones (6, 7) are separated from one another and spaced from the border (9, 10) of a pair of opposing sides (11, 12) of the quadrilateral sheet, wherein , the terminals are positioned at the location of the first section (9) of the outline of said pair of opposing sides (11, 12) of the first glass sheet (1) and each zone (6, 7) is electrically connected to the other at the location of the second section (10) of the outline of the other side (12) of the pair of opposing sides (11, 12) of the first glass sheet (1).

8. The panel according to claim 7, **characterized in that** the zones (6, 7) of the layer (5) of electrically conducting material are spaced also from edges (15, 16) of the other pair (17, 18) of opposing sides of the quadrilateral first glass sheet (1).

9. The panel according to claims 1 to 8, **characterized in that** the zones (6, 7) of the layer (5) of electrically conducting material are spaced from the outline border (9, 10, 15, 16) of the first glass sheet (1) over a section (13, 14, 19, 20) of no less than 5 mm.

10. The panel according to claims 1 to 9, **characterized in that** each electrical terminal (21, 22) is connected to the respective zone (6, 7) of the layer (5) of electrically conducting material by a respective strip (24, 25), extending predominantly longitudinally, of electrically conducting material, the conductive strips extending over the zones (6, 7) along the first section (9) of the outline of the first glass sheet (1) at the location of which the respective terminal is positioned.

11. The panel according to claim 10, **characterized in that** the zones (6, 7) of the layer (5) of electrically conducting material are electrically connected to one another by a bar (26), extending predominantly longitudinally, of electrically conducting material which extends over these zones (6, 7) along the second section (10) of the outline of the first glass sheet (1) opposite to the first section (9) at the location of which the electrical terminals (21, 22) and the relative strips of electrically conducting material (24, 25) are positioned.

12. A wall delimiting a shower stall comprising a heating panel according to one or more of claims 1 to 11.

## Patentansprüche

1. Elektrisch beheizbare Verbundglasplatte, die dazu bestimmt ist, Duschkabinenwände zu bilden, umfassend:
eine erste Glasscheibe (1),
eine zweite Glasscheibe (2), die denselben Umriss wie die erste Glasscheibe (1) aufweist und auf ihr aufliegt,
eine Zwischenschicht (3) aus elektrisch nicht leitfähigem Material zwischen der ersten (1) und der zweiten Glasscheibe (2), wobei die Zwischenschicht dazu bestimmt ist, eine Verbundstruktur mit den Glasscheiben zu bilden,
eine Schicht (5) aus elektrisch leitfähigem Material, das sich zwischen der Zwischenschicht (3) und einer Oberfläche (4) der ersten Glasscheibe (1) erstreckend und der Zwischenschicht (3) gegenüberliegend angeordnet ist,
wobei die Schicht (5) aus elektrisch leitfähigem Material (5) sich so erstreckt, dass ein Randbereich (13, 14, 19, 20) auf der Oberfläche (4) der ersten Glasscheibe (1) gebildet wird, wobei der Randbereich frei von elektrisch leitfähigem Material ist, wobei die Schicht (5) aus elektrisch leitfähigem Material von der Umrisskante (9, 10, 15, 16) der ersten Glasscheibe (1) und der Zwischenschicht (3) beabstandet ist, **dadurch gekennzeichnet, dass** die Schicht (5) aus elektrisch leitfähigem Material bildet zwei Bereiche (6, 7), die durch einen elektrisch nicht leitfähigen Abschnitt (8) der Oberfläche (4), die frei von der Schicht aus elektrisch leitfähigem Material (5) ist, voneinander getrennt sind,
wobei jeder Bereich (6, 7) mit einem ersten und einem zweiten Anschluss (21, 22) in Form von Elektroden versehen ist, die mit der Schicht (5) aus elektrisch leitfähigem Material an voneinander beanstandeten Punkten verbunden und in Kontakt sind, wobei beide elektrische Anschlüsse (21, 22) von außerhalb der ersten Glasscheibe (1) zugänglich sind, indem sie durch ein jeweiliges Loch (23, 23a) hindurch geführt werden,
die beiden Bereiche (6, 7) sind von der Umrisskante (9, 10, 15, 16) der ersten Glasscheibe (1) beabstandet und mit dem jeweiligen Anschluss (21, 22) verbunden, wobei der erste und der zweite elektrische Anschluss an der Stelle eines ersten Abschnitts (9) des Umrisses der ersten Glasscheibe (1) angeordnet sind, wobei jeder Bereich elektrisch mit dem anderen an der Stelle eines zweiten Abschnitts (10) des Umrisses der ersten Glasscheibe verbunden ist, wobei der zweite Abschnitt (10) des Umrisses dem ersten Abschnitt (9) des Umrisses gegenüberliegt und davon beabstandet ist,
der erste und der zweite elektrische Anschluss (21, 22) umfassen jeweils einen Abschnitt (21 a, 22a), der in jeweiligen Aussparungen (29, 30) einer Platte (27) untergebracht ist, die an der Außenfläche der ersten Glasscheibe (1) befestigt sind, wobei der Abschnitt des Anschlusses von einer inneren Wand (29a, 30a) der jeweiligen Aussparung (29, 30) durch Bildung eines umgebenden, ringförmigen Raumes beabstandet ist, und
ein kastenförmiges Element (34), das an der Platte (27) starr mit der ersten Glasscheibe (1) befestigt ist, wobei das kastenförmige Element (34) Elektroversorgungsanschlüsse enthält, die mit den Abschnitten (21 a, 22a) des ersten und des zweiten elektrischen Anschlusses (21, 22) verbunden werden können, die in jeweiligen Aussparungen (29, 30) untergebracht sind.

2. Platte nach Anspruch 1, **dadurch gekennzeichnet, dass** die Schicht (5) aus elektrisch leitfähigem Material durch Beschichten mit Metalloxid gebildet wird, das auf die Oberfläche der ersten Glasscheibe (1) aufgebracht wird, die der Zwischenschicht (3) gegenüberliegt.

3. Platte nach Anspruch 1, **dadurch gekennzeichnet, dass** die Schicht (5) aus elektrisch leitfähigem Material durch Beschichten mit Metalloxid gebildet wird, das auf der Oberfläche der Zwischenschicht (3) aufgebracht wird, die der inneren Oberfläche (4) der ersten Glasscheibe (1) gegenüberliegt.

4. Platte nach den Ansprüchen 1 bis 3, **dadurch gekennzeichnet, dass** die Zwischenschicht (3) aus einem Kunststoff besteht.

5. Platte nach Anspruch 1, **dadurch gekennzeichnet, dass** die elektrischen Anschlüsse (21, 22) mit der Schicht aus elektrisch leitfähigem Material (5) durch Einfügen jeweiliger, sich vorwiegend längs erstreckender Streifen (24, 25) aus leitfähigem Material verbunden sind, die dazu bestimmt sind, den elektrischen Strom an die elektrisch leitfähige Schicht (5) zu verteilen.

6. Platte nach Anspruch 5, **dadurch gekennzeichnet, dass** die Streifen aus leitfähigem Material, die mit den Anschlüssen verbunden sind, sich längs gegenüberliegender Kanten des Umrisses der ersten Glasscheibe (1) erstrecken.

7. Platte nach den Ansprüchen 1 bis 6, wobei die erste Glasscheibe (1) einen viereckigen Umriss aufweist, die zweite Glasscheibe (2) denselben viereckigen Umriss wie die erste Glasscheibe aufweist und wobei die beiden Bereiche (6, 7) voneinander getrennt und von der Kante (9, 10) eines Paares von gegenüberliegenden Seiten (11, 12) der viereckigen Scheibe beabstandet sind, wobei die Anschlüsse an der Stelle des ersten Abschnitts (9) des Umrisses des Paares von gegenüberliegenden Seiten (11, 12) der ersten Glasscheibe (1) angeordnet sind und jeder Bereich (6, 7) mit dem anderen an der Stelle des zweiten Bereichs (10) des Umrisses der anderen Seite (12) des Paares von gegenüberliegenden Seiten (11, 12) der ersten Glasscheibe (1) elektrisch verbunden ist.

8. Platte nach Anspruch 7, **dadurch gekennzeichnet, dass** die Bereiche (6, 7) der Schicht (5) aus elektrisch leitfähigem Material auch von den Kanten (15, 16) des anderen Paares (17, 18) von gegenüberliegenden Seiten der ersten viereckigen Glasscheibe (1) beabstandet sind.

9. Platte nach den Ansprüchen 1 bis 8, **dadurch gekennzeichnet, dass** die Bereiche (6, 7) der Schicht (5) aus elektrisch leitfähigem Material von der Umrisskante (9, 10, 15, 16) der ersten Glasscheibe (1) über einen Abschnitt (13, 14, 19, 20) von mindestens 5 mm beabstandet sind.

10. Platte nach den Ansprüchen 1 bis 9, **dadurch gekennzeichnet, dass** jeder elektrische Anschluss (21, 22) mit dem jeweiligen Bereich (6, 7) der Schicht (5) aus elektrisch leitfähigem Material mittels eines jeweiligen, sich vorwiegend längs erstreckenden Streifens (24, 25) aus elektrisch leitfähigem Material verbunden ist, wobei die leitfähigen Streifen sich über die Bereiche (6, 7) längs des ersten Abschnitts (9) des Umrisses der ersten Glasscheibe (1) an der Stelle erstrecken, an der der jeweilige Anschluss angeordnet ist.

11. Platte nach Anspruch 10, **dadurch gekennzeichnet, dass** die Bereiche (6, 7) der Schicht (5) aus elektrisch leitfähigem Material mittels einer sich vorwiegend längs erstreckenden Stange (26) aus elektrisch leitfähigem Material elektrisch miteinander verbunden sind, welches sich über diese Bereiche (6, 7) längs des zweiten Abschnitts (10) des Umrisses der ersten Glasscheibe (1) dem ersten Abschnitt (9) gegenüberliegend an der Stelle erstreckt, an der die elektrischen Anschlüsse (21, 22) und die jeweiligen Streifen aus elektrisch leitfähigem Material (24, 25) angeordnet sind.

12. Eine Duschkabine begrenzende Wand, umfassend eine Heizplatte gemäß einem oder mehreren der Ansprüche 1 bis 11.

## Revendications

1. Panneau de verre composite chauffé électriquement conçu pour former des parois pour des cabines de douche, comprenant :
une première feuille de verre (1),
une deuxième feuille de verre (2), ayant le même contour que la première feuille de verre (1) et superposée à celle-ci,
une couche intermédiaire (3) de matériau non électriquement conducteur disposée entre la première (1) et la deuxième feuille de verre (2), la couche intermédiaire étant conçue pour former une structure composite avec les feuilles de verre,
une couche (5) de matériau électriquement conducteur positionnée et s'étendant entre la couche intermédiaire (3) et une surface (4) de ladite première feuille de verre (1) faisant face à la couche intermédiaire (3), ladite couche (5) de matériau électriquement conducteur s'étendant de manière à former une zone de bord (13, 14, 19, 20) de la surface (4) de ladite première feuille de verre (1), la zone de bord étant dépourvue de matériau électriquement conducteur, dans lequel ladite couche (5) de matériau électriquement conducteur est espacée du bord de contour (9, 10, 15, 16) de la première feuille de verre (1) et de la couche intermédiaire (3), **caractérisé en ce que** ladite couche (5) de matériau électriquement conducteur forme deux zones (6, 7) séparées l'une de l'autre par une section non électriquement conductrice (8) de la surface (4) dépourvue de la couche de matériau électriquement conducteur (5),
chaque zone (6, 7) est munie d'une première et d'une deuxième borne électriques (21,22), sous la forme d'électrodes, qui sont connectées et en contact avec la couche (5) de matériau électriquement conducteur en des points espacés les uns des autres, les deux bornes électriques (21, 22) étant accessibles de l'extérieur de la première feuille de verre (1) en les faisant passer à travers un trou respectif (23, 23a),
les deux zones (6, 7) sont espacées du bord de contour (9, 10, 15, 16) de la première feuille de verre et sont connectées à la borne respective (21, 22), les première et deuxième bornes électriques étant positionnées au niveau de l'emplacement d'une première section (9) du contour de la première feuille de verre, chaque zone étant connectée électriquement à l'autre au niveau de l'emplacement d'une deuxième section (10) du contour de la première feuille de verre (1), ladite deuxième section (10) du contour étant opposée à la première section (9) du contour et espacée de celle-ci,
les première et deuxième bornes électriques (21, 22) comprennent une section respective (21 a, 22a) logée dans des évidements respectifs (29, 30) d'une plaque (27) fixée à la surface extérieure de la première feuille de verre (1), la section de borne étant espacée d'une paroi intérieure (29a, 30a) de l'évidement correspondant (29, 30) grâce à la formation d'un espace annulaire périphérique, et
un élément en forme de caisson (34) fixé à la plaque (27) rigide avec la première feuille de verre (1), l'élément en forme de caisson (34) contenant des bornes d'alimentation électrique qui peuvent être couplées aux sections (21 a, 22a) des première et deuxième bornes électriques (21,22) logées dans lesdits évidements respectifs (29, 30).

2. Panneau selon la revendication 1, **caractérisé en ce que** la couche (5) de matériau électriquement conducteur est formée par un revêtement d'oxyde métallique déposé sur la surface (4) de la première feuille de verre (1) faisant face à la couche intermédiaire (3).

3. Panneau selon la revendication 1, **caractérisé en ce que** la couche (5) de matériau électriquement conducteur est formée par un revêtement d'oxyde métallique déposé sur la couche intermédiaire (3) sur sa surface faisant face à la surface intérieure (4) de la première feuille de verre (1).

4. Panneau selon les revendications 1 à 3, **caractérisé en ce que** la couche intermédiaire (3) est constituée d'un matériau plastique.

5. Panneau selon la revendication 1, **caractérisé en ce que** les bornes électriques (21, 22) sont connectées à la couche de matériau électriquement conducteur (5) grâce à l'interposition de bandes de matériau conducteur respectives (24, 25), s'étendant principalement longitudinalement, conçues pour distribuer le courant électrique à la couche électriquement conductrice (5).

6. Panneau selon la revendication 5, **caractérisé en ce que** les bandes de matériau conducteur connectées aux bornes s'étendent le long de bords opposés du contour de la première feuille de verre (1).

7. Panneau selon les revendications 1 à 6, dans lequel la première feuille de verre (1) a un contour quadrilatéral, la deuxième feuille de verre (2) a le même contour quadrilatéral que la première feuille de verre et dans lequel les deux zones (6, 7) sont séparées l'une de l'autre et espacées du bord (9, 10) d'une paire de côtés opposés (11, 12) de la feuille quadrilatérale, dans lequel les bornes sont positionnées au niveau de l'emplacement de la première section (9) du contour de ladite paire de côtés opposés (11, 12) de la première feuille de verre (1) et chaque zone (6, 7) est connectée électriquement à l'autre au niveau de l'emplacement de la deuxième section (10) du contour de l'autre côté (12) de la paire de côtés opposés (11, 12) de la première feuille de verre (1).

8. Panneau selon la revendication 7, **caractérisé en ce que** les zones (6, 7) de la couche (5) de matériau électriquement conducteur sont également espacées de bords (15, 16) de l'autre paire (17, 18) de côtés opposés de la première feuille de verre quadrilatérale (1).

9. Panneau selon les revendications 1 à 8, **caractérisé en ce que** les zones (6, 7) de la couche (5) de matériau électriquement conducteur sont espacées du bord de contour (9, 10, 15, 16) de la première feuille de verre (1) sur une section (13, 14, 19, 20) non inférieure à 5 mm.

10. Panneau selon les revendications 1 à 9, **caractérisé en ce que** chaque borne électrique (21, 22) est connectée à la zone respective (6, 7) de la couche (5) de matériau électriquement conducteur par une bande respective (24, 25), s'étendant principalement longitudinalement, de matériau électriquement conducteur, les bandes conductrices s'étendant sur les zones (6, 7) le long de la première section (9) du contour de la première feuille de verre (1) au niveau de l'emplacement où la borne respective est positionnée.

11. Panneau selon la revendication 10, **caractérisé en ce que** les zones (6, 7) de la couche (5) de matériau électriquement conducteur sont connectées électriquement entre elles par une barre (26), s'étendant principalement longitudinalement, de matériau électriquement conducteur qui s'étend sur ces zones (6, 7) le long de la deuxième section (10) du contour de la première feuille de verre (1) opposée à la première section (9) au niveau de l'emplacement où les bornes électriques (21, 22) et les bandes de matériau électriquement conducteur correspondantes (24, 25) sont positionnées.

12. Paroi délimitant une cabine de douche comprenant un panneau chauffant selon une ou plusieurs des revendications 1 à 11.
